# EUROPEAN PATENT SPECIFICATION

(11) **EP 1 411 253 B1**
(45) Date of publication and mention of the grant of the patent: **09.09.2009**
(21) Application number: 01982092.7
(22) Date of filing: 12.09.2001
(51) Int. Cl.: F16B 47/00

(54) **AN ADHESIVE SHEET TYPE HOLDING DEVICE FOR MOUNTING ONTO A WALL**
KLEBEFOLIEN-HALTEVORRICHTUNG ZUR BEFESTIGUNG AN EINER WAND
DISPOSITIF DE SUPPORT D'UNE FEUILLE ADHESIVE DESTINEE A ETRE MONTEE SUR UN MUR

(30) Priority: 13.09.2000 CN 00249228; 12.10.2000 CN 00249599; 14.12.2000 CN 00259597; 07.02.2001 CN 01210441
(43) Date of publication of application: 21.04.2004
(73) Proprietor: Lan, Yung-huei, Taipei Taiwan (TW)
(72) Inventor: Lan, Yung-huei, Taipei Taiwan (TW)
(74) Representative: Reinhard - Skuhra - Weise & Partner GbR
(86) International application number: PCT/CN2001/001394
(87) International publication number: WO 2002/033274

(56) References cited:
- US-A- 2 765 998
- US-A- 4 309 011
- US-A- 4 671 480
- US-A- 4 756 498
- US-A- 4 842 912
- US-A- 5 121 896
- US-A- 5 275 367
- US-A- 5 507 464
- US-A- 5 913 480

## Description

### FIELD OF THE INVENTION

The present invention relates to a holding device, more particularly, to a holding device for mounting onto a wall.

### DESCRIPTION OF THE RELATED ART

A holding device for mounting onto a wall is a device mounted onto wall surface for holding or hanging something, such as a coat and hat hook, a soap holder, a bathroom towel rack and the like. The known holding device for mounting onto a wall generally comprises a base and a holder with an appropriate shape of a bracket connected with the base for holding or hanging commodities. The base of the holder of the holding device for a wall has to be securely and durably fixed on a wall in order to hold commodities securely but not to damage and affect the surface of the wall. In the prior art, the base is fixed onto a wall by hammering nails into the wall, adsorbing thereon with suction by an acetabula, or cementing thereon with a sheet having glue at its double faces, hot-melt adhesive and the like. However, the wall surface sometimes would be prone to be damaged if the base is fixed by hammering nails into the wall, the adsorbing force and duration is not ideal due to the limitation of the area and the air tightness of the acetabula if the base is fixed by adsorbing thereon with the acetabula, while the fastness is not enough due to the limitation of the adhesive force if the base is fixed by cementing thereon with a sheet having glue at its double faces or hot-melt adhesive.
US 4,309,011 discloses a wall fixture assembly for adhesively mounting an object onto a wall. A base sheet of the assembly is coated to the layer of a pressure sensitive adhesive.
US 2,765,998 relates to a supporting device for adhesive application. A layer of pressure-sensitive adhesive coats a rear surface of a plastic supporting device.
US 4,671,480 discloses a flexible adhesively secured holding device. An underside of a body portion of the holding device is coated with a suitable tacky non drying pressure sensitive adhesive.
US 5,275,367 discloses a self securing holding device. A PVC-layer provides a vacuum holding power by molecular adhesion to a wall.
US 5,913,480 discloses a self-adhesive fastening device covered on a rear surface by an adhesive covering.
US 5,507,464 discloses an article support adapted for adhering to a substrate. An elastic adhesive tape is provided on a backside to attach the article support to a substrate.
US 4,842,912 discloses adhesive attachments using bonding agents.
US 4,756,498 discloses a surface mounted article holding device which is adhesively attached to a supporting surface.

### SUMMARY OF THE INVENTION

It is the object of the present invention to overcome the above disadvantages and to provide an adhesive sheet type holding device for mounting onto a wall which can be securely and durably fixed onto a wall without any damage to the wall.

In order to achieve the above object, the present invention provides an adhesive sheet type holding device for mounting onto a wall as defined in claim 1.

The most important function of the adhesive sheet is to provide air-tight effect. The adhesive sheet may be paper and film provided on the back side thereof with adhesive or fluxible solid (ropy or gelatiniform) filling substance or the adhesive sheet may be a electrostatic paster with no adhesive on the back side thereof and with a highly smooth surface. The electrostatic paster can be used for smooth wall surfaces such as glass, ceramic tile, plastic and baking finish surface, the adhesive sheet with adhesive on its back can be used for the general wall surface, while the adhesive sheet with fluxible solid filling substance on its back can be suitable for the rough surface since the filling substance can fill in the depression on the surface so that the adhesive sheet with fluxible solid filling substance on its back can be tightly mounted on the wall.

In use, the adhesive sheet is attached onto a wall, and it comes into tight contact with the wall to achieve excellent air-tight effect due to the adhesive on its back or the adsorption affinity of its surface. When the holder bears an object, the force applied to the base causes the adhesive sheet to be detached from the wall and generates a negative pressure clearance between them. The base and the adhesive sheet is pressed against the wall due to the air pressure so that the holding device can be fixed on the wall securely and durably.

The adhesive sheet type holding device according to present invention can be fixed on the wall securely and durably since it is mounted onto a wall through the adhesive sheet which has contact area with the wall larger than the area of the back of the base and good airtight effect between the sheet and the wall, In addition, the adhesive sheet may be transparent or be printed with various specific pattern on its surface, so the holding device according to the present invention not only can not damage to the wall, but also can form various specific appearance.

### BRIEF DESCRIPTION OF THE DRAWINGS

Fig. 1 is a schematic view showing the structure of the adhesive sheet type holding device for mounting onto a wall according to a first example not part of the present invention;
Fig. 2 is a schematic exploded view showing the structure of the adhesive sheet type holding device for mounting onto a wall according to a second example not part of the present invention;
Fig. 3 is sectional view showing the lower portion of the adhesive sheet type holding device shown in the fig. 2 which has been assembled together;
Fig. 4 is a perspective view with a local section showing the adhesive sheet type holding device for mounting onto a wall according to a third example not part of the present invention;
Fig. 5 is a schematic view showing the back of the lower friction plate of the adhesive sheet type holding device for mounting onto a wall shown in the fig. 4;
Fig. 6 is an inverse schematic view showing the back of the base and the upper friction plate of the adhesive sheet type holding device for mounting onto a wall shown in the fig. 4;
Fig. 7 is a schematic sectional view showing the adhesive sheet type holding device for mounting onto a wall shown in the fig. 4;
Fig. 8 is a schematic view showing the condition of forces acting on the adhesive sheet type holding device for mounting onto a wall shown in the fig. 7;
Fig. 9 is a schematic exploded view showing the structure of the adhesive sheet type holding device for mounting onto a wall according a fourth example not part of the present invention;
Fig. 10 is a schematic view with a local section showing the structure of the adhesive sheet type holding device for mounting onto a wall shown in the fig. 9 which has been assembled together;
Fig. 11 is a sectional view along the line A-A in the fig. 10;
Fig. 12 is a sectional view along the line B-B in the fig. 11;
Fig. 13 is a schematic exploded view showing the structure of the adhesive sheet type holding device for mounting onto a wall according to an embodiment of the present invention;
Fig. 14 is a schematic view with a local section showing the structure of the adhesive sheet type holding device for mounting onto a wall shown in the fig. 13 which has been assembled together;
Fig. 15 is a sectional view along the line C-C in the fig. 14;
Fig. 16 is a schematic view showing the structure of the adhesive sheet type holding device for mounting onto a wall according to a sixth example not part of present invention.

### DETAILED DESCRIPTION OF THE PREFERRED EMBODIMENTS

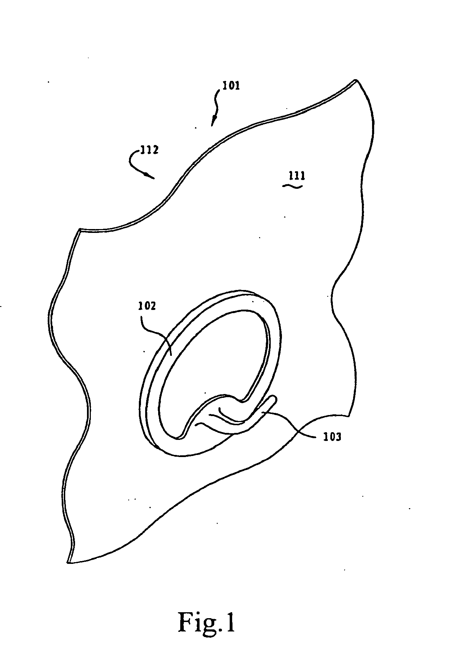

In the first example not part of the present invention, as shown in the fig. 1, an adhesive sheet type holding device for mounting onto a wall includes an adhesive paper sheet 101 which has a square shape and which may have a variety of particular pattern or picture such as a 3D pattern, a laser effect pattern and the like on its front side 111 and adhesive on its back side 112 to be stuck on a wall; a base 102 having the shape of a flat plate on its back side to be stuck on the front side 111 of the adhesive paper sheet 101; and a holder 103 having the shape of a hook and forming integrally with the base 102.

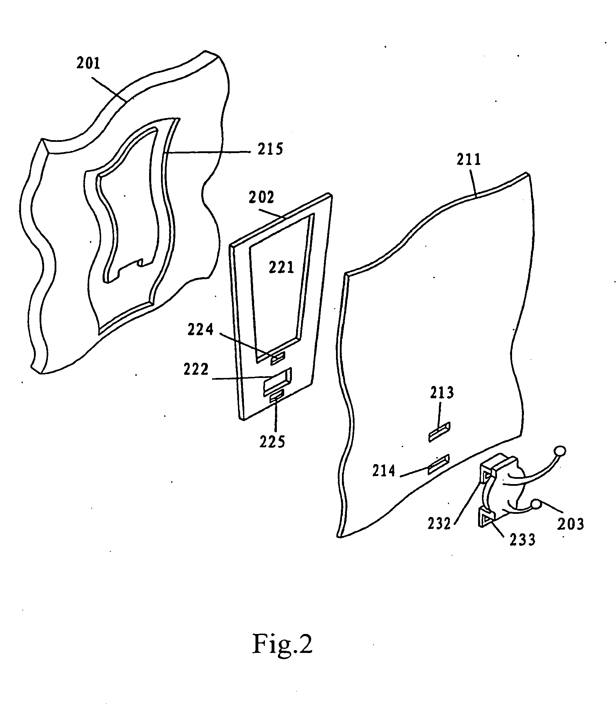

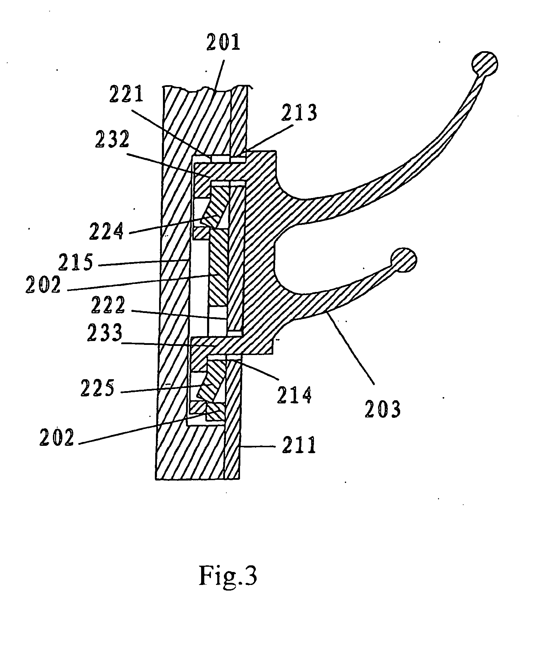

There are a variety of methods to connect the adhesive sheet and the base, for example, the adhesive may have an adhesive layer on its back side and a film layer on its surface, so that the base is fixed between the adhesive layer and the film layer. In the second example not part of the present invention, as shown in the fig. 2, an adhesive sheet type holding device for mounting onto a wall includes an adhesive leather sheet 201; the base 202; a film 211 and a holder 203. The adhesive leather sheet 201 made of soft material has a square shape and is provided with adhesive on its back side to be stuck on a wall and a groove 215 for containing the base 202 on its front side. The base 202 having the shape of a trapezoid plate is provided with an upper hole 221 and a lower hole 222 under which inverse hooks 224 and 225 are provided. The film 211 is provided with through holes 213 and 214 at the positions corresponding to the upper hole 221 and the lower hole 222 of the base 202, respectively. The holder 203 is a coat and hat hook and it is provided with two hooks 232 and 233 on its back side. As shown in the fig. 3, the base 202 is disposed in the groove 215 in the front side of the adhesive leather sheet 201 to which the film 211 adheres when they are assembled, so that the base 202 is fixed in the groove 215 of the adhesive leather sheet 201, and the hooks 232 and 233 on the back side of the holder 203 is hitched or clasped on the edges of the upper hole 221 and the lower hole 222 of the base 202 through the through holes 213 and 214 of the film 211, and fixed thereon with the inverse hooks 224 and 225.

In order to prevent the object hung on the holder from falling down, an upward force equal to the weight of the object has to be provided. The air pressure provides a horizontal force, i.e. a normal force which is necessary for a friction force and which presses the base and the adhesive sheet under the base against the wall, so that a static upward friction force is generated between the wall and the adhesive sheet. The upward force to prevent the object from falling down is provided by adhesive and the friction force if the adhesive sheet has adhesive on its back side. As long as the maximal static friction force is equal to the weight of the object, the falling of the object can be prevented. According to the analysis of the forces acting on the device, friction plates are provided by the side of (at the left side, right side, upper side and lower side of) the plate-shaped base, and the base is connected with the friction plates by movable joints to improve the effect of the friction and to increase the friction force. When the holder connected to the base bears an object, since the base connected with the friction plates by the joints is movable, in the case that the force is applied to the base and the adhesive sheet connected with the base produces a trend to separate from the wall, the friction plates push or pull the base through the joints so that the desquamating of the base can be prevented. On the other hand, since the joints connecting the base with the friction plates are bended easily, the tight attaching can be provided even if the wall is slightly curved. In order to be attached to the curved surface, the base can be divided into a plurality of subbases which are connected with one another by movable joints.

The above joints may be a bendable hinge or an appropriate cam structure. When the cam structure is used for the joints, it can cause the base and friction plates to laterally move with respect to each other when the base moves towards the friction plates, so that the base and the adhesive sheet connected with the base is lifted up and separated from the wall surface, but the friction plate is maintained to be tightly attached to the wall. The cam structure may be slant structure or an inclined pushing piece mechanism or the like.

The cam should be provided at the middle position of the junction of the base and the friction plates, so that when the cam acts, the force applied by it is focused on the center position. As a result, the middle portion of the base adjacent to the friction plates uplifts higher than the other portions, while the margin portion is more adjacent to the wall, so that the adhesive sheet of the margin of the base is only slightly pulled upwards and has less possibility to rupture.

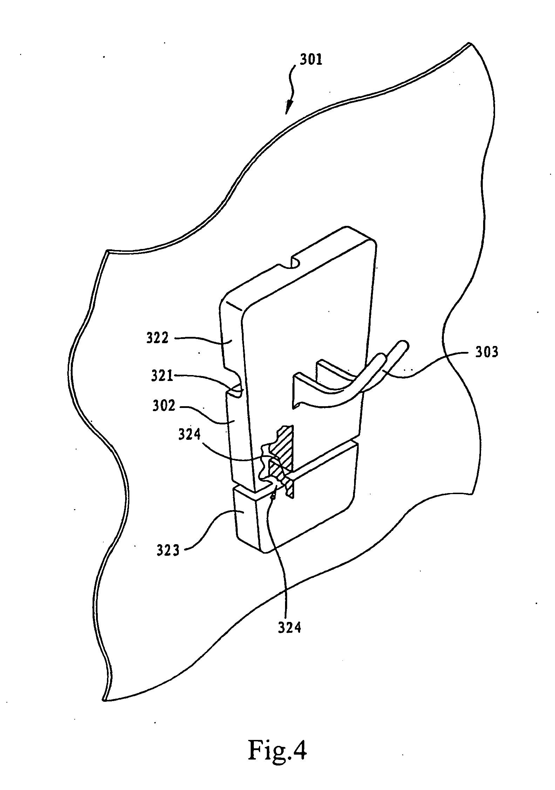

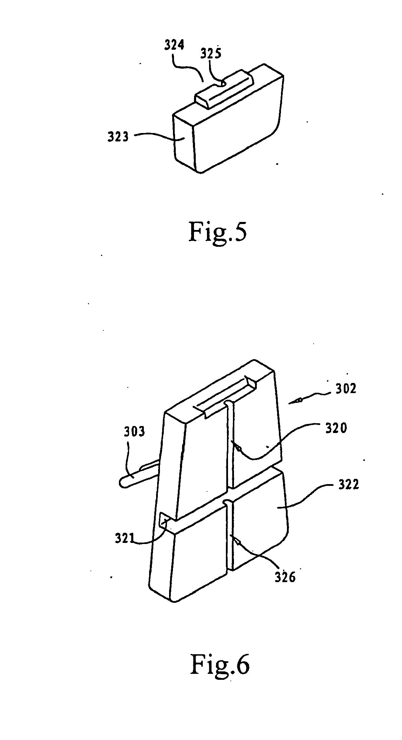

In the third example not part of the present invention, as shown in the figs. 4-6, an adhesive sheet type holding device for mounting onto a wall includes an adhesive paper sheet 301, a base 302 and a holder 303. The adhesive paper sheet 301 is an electrostatic adhesive paper (i.e. an electrostatic paster) having a square shape. The base 302 having the shape of a plate is stuck on the front side of the adhesive paper sheet 301. The holder 303 is two side by side hooks which are adjacent to each other and which are connected to the base 302. The base is provided with an upper friction plate 322 and a lower friction plate 323 attached to the front side of the adhesive paper sheet 301 on its upper portion and its lower portion, respectively. The upper friction plate 322 is connected with the base 302 through a hinge 321 and the lower friction plate 323 is connected with the base via a slant-shaped cam structure 324. The base 302, the upper friction plate 322 and the lower friction plate 323 are provided thereon with hinges 320, 326 and 325 formed by longitudinal grooves to be bent easily, so that they can achieve a tight attaching to the curved wall surface.

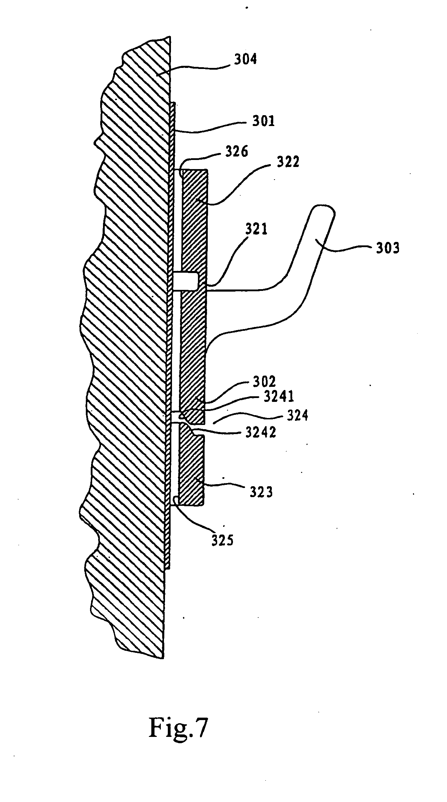

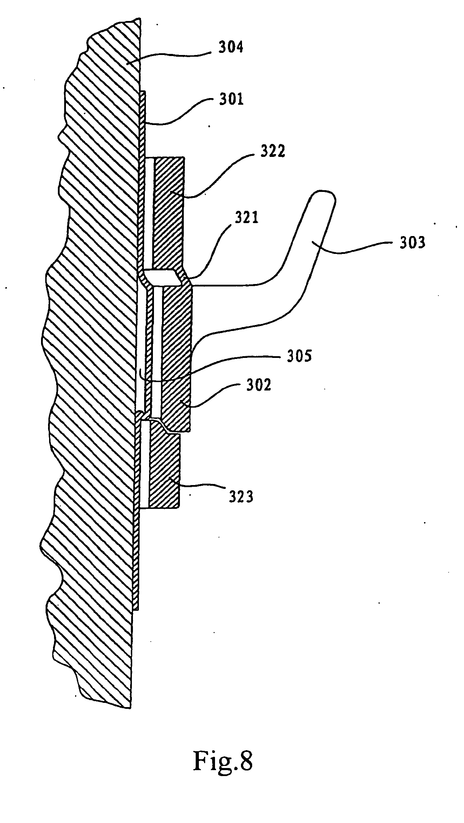

When the holder 303 bears no load, as shown in the fig. 7, the base 302 is contacted with the wall surface and the upper slant 3241 has not yet contacted with the lower slant 3242 of the cam structure 324. When a force is applied to the hooks, the base 302 moves downwards, the upper slant 3241 slides onto the lower slant 3242 along the slant, so that the base 302 and the adhesive paper sheet 301 connected to the base 302 are detached from the wall 304. A clockwise torque as shown in the fig. 8 applied to the holder 303 is generated due to the force applied thereto and it causes the upper portion of the base 302 and the adhesive paper sheet 301 attached to the base 302 to be detached from the wall 304. As a result, the adhesive paper sheet 301 is pulled upwards by a little due to its elasticity, so that negative pressure is generated in the clearance 305 between the adhesive paper sheet 301 and the wall 304, at the same time, negative pressure is also produced between the adhesive paper sheet 301 beneath the upper friction plate 322 and the lower friction plate 323 and the wall 304, so that the air pressure presses the friction plates and the adhesive paper sheet 301 beneath the friction plates against the wall 304. Thus, the resultant static friction force between the adhesive paper sheet 301 and the wall 304 produces an effect preventing the adhesive paper sheet 301 from sliding downwards so as to prevent the base 302 from falling.

The pressing roller device for ejecting the air between the adhesive paper sheet and the wall can further be provided in the present invention in order to keep well air tightness between the adhesive paper sheet and the wall.

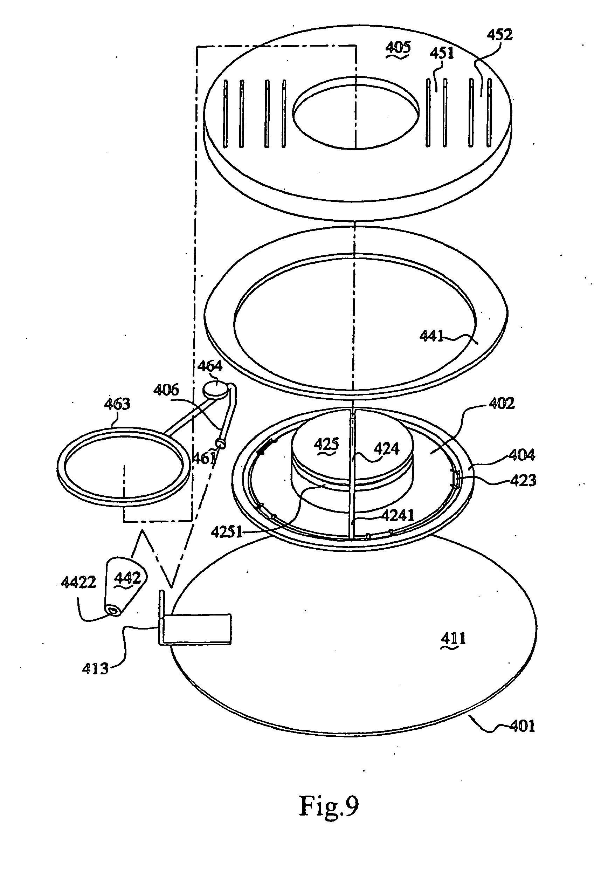

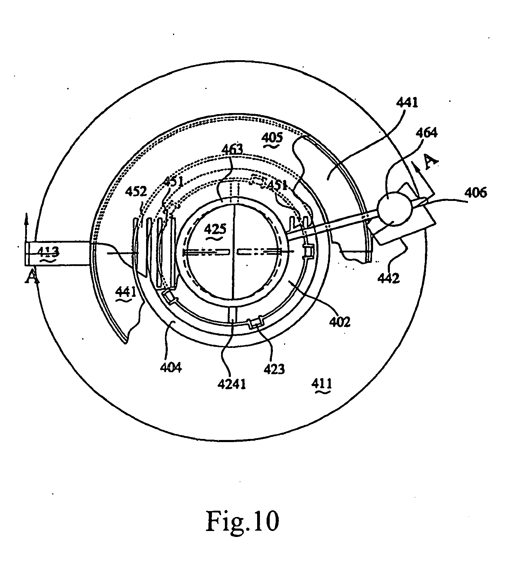

In the fourth example not part of the present invention, as shown in the figs. 9-12, an adhesive sheet type holding device for mounting onto a wall includes an adhesive paper sheet 401, a base 402, a friction plate 404, a rolling ring 441, a pressing roller 442, a pressing plate 405, a peeling piece 413 and a holder 403 (only shown in the fig. 10). The external surface 411 of the adhesive paper sheet 401 having a round shape is stuck on the surface of the base 402 pressing against the wall and the surface of the friction plate 404 pressing against the wall. In addition, the adhesive paper sheet 401 is provided with adhesive on the internal surface thereof to be stuck on the wall. The base 402 having a round shape is provided with ligaments on the periphery thereof and is connected with the friction plates 404 having the shape of a circular ring. Slants engaging with each other are provided on the periphery of the base 402 and the internal periphery of the friction plate 404. When the base 402 moves outwards in any direction and meet with the friction plate 404, the slant of the base 402 rides on the slant of the friction plate 404 and thus the base 402 is pushed up and detached from the wall, so that the adhesive paper sheet 401 attached to the base 402 follows the latter to depart from the portion of wall. At the portion a negative-pressure clearance is generated between the adhesive paper sheet 401 and the wall and negative pressure is also produced between the wall and the adhesive paper sheet 401 beneath the friction plate 404 adjacent to the portion due to the effect. As a result, the air pressure presses the friction plate 404 against the wall, so that the adhesive paper sheet 401 beneath the friction plate 404 is tightly and securely pressed on the wall since the resultant friction force blocks its falling.

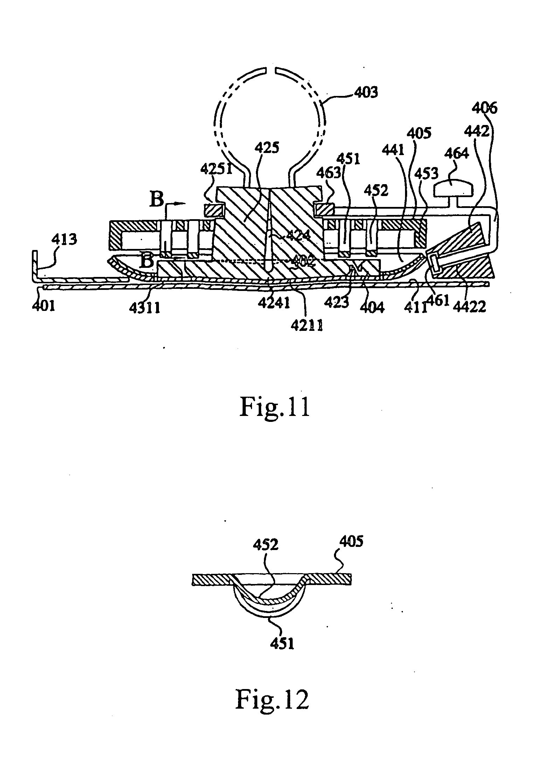

The base 402 is provided at the center thereof with a groove 424 formed with a hinge 4241 on the lower end thereof. As shown in the fig. 11, the upper end of the groove 424 closes if no force is applied thereto, and the back side of the base 402, i.e. a press attaching surface 4211, is formed with the shape of a protrusion projected towards the wall (downwards). As a result, when the base 402 is pressed and attached onto the wall, the center portion of the base 402 firstly contacts with the wall, so that the air between the adhesive paper sheet 401 and the wall is ejected outwards from the center portion.

In order to make the lower surface of the base 402 bent and to have a shape projecting downwards from the center thereof, beside the above hinge structure, the press attaching surface 4211 may be formed into a spherical surface projecting downwards, provided thereon with elastic material and a hollow chamber to be planished outwards from the center portion as the above.

Since it will take long distance for the air to penetrate into the portion beneath the friction plate from the margin of the adhesive paper sheet around the friction plate 404, it can effectively improve the air-tight effect to press the adhesive paper sheet tightly on the wall.

In order to be tightly pressed on the wall the adhesive paper sheet around the friction plate 404, provided around the friction plate 404 is the rolling ring 441 which has a ring shape with its inner ring projecting towards the adhesive paper sheet 401 and which may be made of elastic material such as spring steel sheet. When the rolling ring 441 is pressed onto the wall, the center of the rolling ring 441 firstly presses the adhesive paper sheet 401 against the wall, and continuously pushing the rolling ring 441 causes the inner ring of the rolling ring 441 to be bent upwards and the entire rolling ring 441 gradually turns upwards, so that the adhesive paper sheet 401 is continuously rolled toward the outer periphery thereof from the inner portion by the rolling ring 441 and the air is ejected so as to be pressed tightly on the wall.

The pressing plate 405 is disposed above the rolling ring 441 and is provided with two long springs having the shape of a arched plate which are capable of pushing the base 402 and two short springs which are capable of pushing the friction plate 404. A pressing foot 453 in a circular ring shape for pushing the outer edge of the rolling ring 441 is also provided around the pressing plate 405. Thus, as long as the pressing plate is pushed, the long springs 451 firstly presses the base 402 flatly against the wall, then, the short springs 452 presses the friction plate 404 against the wall, next, the pressing foot 453 pushes the rolling ring 441, so that the air between the adhesive paper sheet 401 and the wall is continuously squeezed out from the center to the outside of the adhesive paper sheet 401.

Since the wall surface may be uneven, a soft cushion 4311 can be provided on the surfaces of the base 402, the friction plate 404 and the rolling ring which are pressed onto the wall, so that the adhesive paper sheet 401 can be yieldingly pressed onto the wall.

Since the further portion around the adhesive paper sheet 401 has a large range, if it is designed to press all of the adhesive paper sheet 401, the rolling ring 441 has to be big, the pressing roller 442 is also disposed on the base 402. The pressing roller 442 has the shape of a roller and is provided at the axis thereof with a shaft hole 4422 through which a shaft 406 is disposed. One end 461 of the shaft 406 is big enough to prevent the pressing roller 442 from detaching from the shaft 406 and the other end is bent and connected to the circular ring 463. The circular ring 463 is fitted over a groove 4251 provided on the cylindrical portion 425 of the base 402 projecting upwards, so that the pressing roller 442 can rotate around the base 402. In order to facilitate the rolling of the pressing roller 442 on the circular road, the rolling body of the pressing roller 442 is formed into an appropriate taper. The pressing roller 442 can be pushed to rotate and pressed by griping a gripe 464 provided on the shaft 406. It can be seen from the fig. 10 that the axis of the pressing roller 442 is inclined by an angle with respect to the radius of the base 402. When the gripe 464 is griped and rotated clockwise, the more close the portion is to the center of the adhesive paper sheet 401, the more earlier the portion is pressed, while the farther the portion is from the center of the adhesive paper sheet 401, the later the portion is pressed. Thus, the air between the adhesive paper sheet and the wall can be squeezed out from the internal side to the external side. The pressing roller 442 is provided with soft material on the rolling surface so that the adhesive paper sheet 401 can be yieldingly pressed onto the wall.

A peeling piece 413 extending upwards is also provided on edge of the outer surface of the adhesive paper sheet. The edge of the adhesive paper sheet can be pulled and detached from the wall and thus the whole holding device can be removed from the wall by pulling the peeling piece 413 up.

It has been proved by the test that the effect to prevent the holder from sagging will be better if the friction plate is directly pressed against the wall, instead of the adhesive paper sheet.

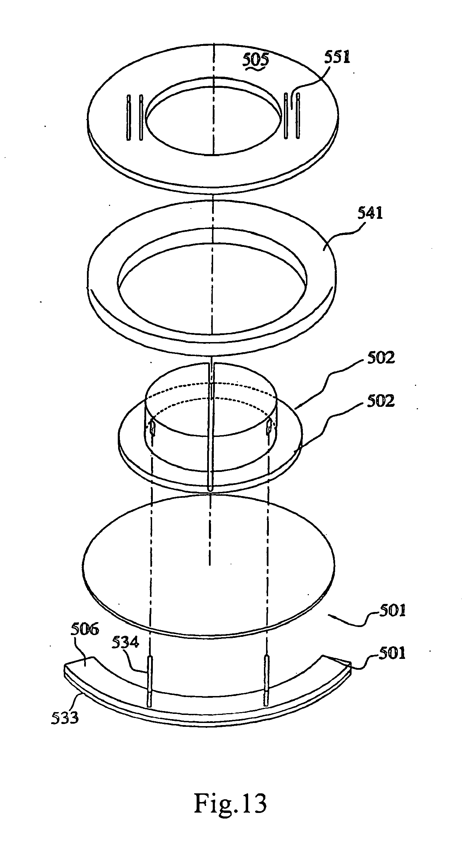

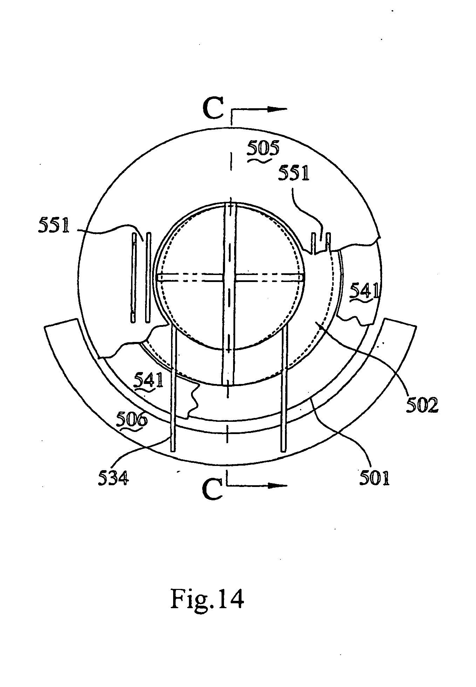

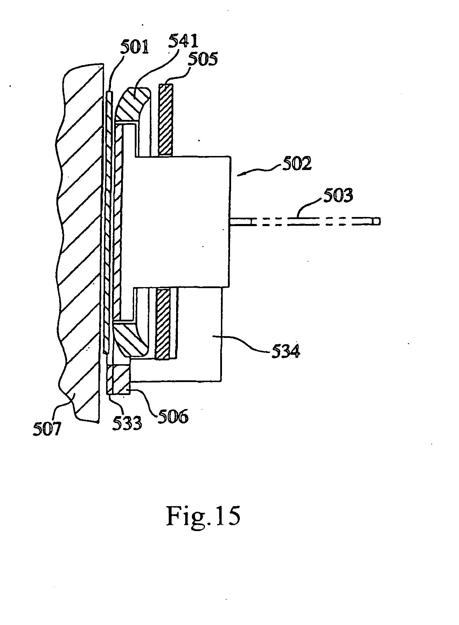

In an embodiment of the present invention, as shown in the figs. 13-15, an adhesive sheet type holding device for mounting onto a wall includes an adhesive paper sheet 501, a base 502, a friction plate 506, a rolling ring 541, a pressing plate 505 and a holder 503 (only shown in the fig. 14). The structure in the embodiment is similar to that in the fourth example except that the friction plate 506 is connected with the base 502 via detachable connecting rods 534 and is directly pressed against the wall 507 on the outside of the area of the adhesive paper sheet 501.since some adhesive paper sheet tend to slide on the wall after they have been pressed for a long time, a material with high coefficient of friction such as foamed rubber and cork is provided on the surface of the friction plate 506. The connecting rods 534 connected with the friction plate are inserted into the corresponding holes in the base and connected with the base, and the adhesive sheet type holding device for mounting onto a wall may be stuck onto the wall before or after the friction plate is assembled on the base during the assembly. The holder 503 may be connected to the base 502 or the connecting rods 534 of the friction plate 506.

The rolling ring 541 made of thick and soft materials has a ring shape with its inner ring projecting towards the adhesive paper sheet, like the above structure. Since the rolling ring 541 is thick, the pressing foot does not have to be projected downwards as that in the fig. 11 and the short springs are no longer used. In use, the base 502 is pressed onto the wall 507 by the pressing plate 505, the long spring 551 firstly presses the base 502 flatly against the wall, then, the rolling ring 541 is pushed by the pressing plate 505 to be deformed and to gradually contact and press the adhesive paper sheet 501 from the center to the outer periphery thereof. Thus, the air between the adhesive paper sheet 501 and the wall 507 is continuously squeezed out from the center to the outer periphery. After that, the friction plate 506 connected with the base 502 by the connecting rods 534 can be directly pressed against the wall 507.

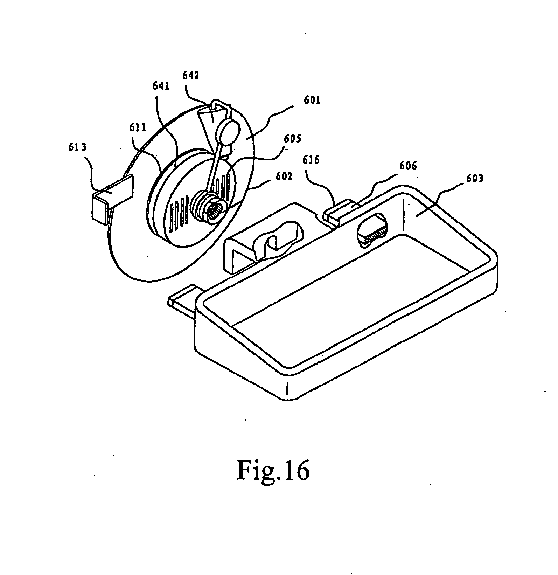

It has been proved through the study that the center portion of the adhesive paper sheet tend to be penetrated by the molecules of the air due to the force from the base so that the air penetrates between the adhesive paper sheet and the wall through the base and the adhesive paper sheet. Therefore, the air tightness of the center portion of the adhesive paper sheet should especially be enhanced. In order to achieve a desired air-tight effect, on one hand, the base and the adhesive paper sheet can be made of materials with high gas barrier property, on the other hand, an air barrier layer may be provided on the surface of the center portion of the adhesive paper sheet and it may be metal foil or PVDC of the like. In a sixth example not part of the present invention, as shown in the figs. 16, an adhesive sheet type holding device for mounting onto a wall includes an adhesive paper sheet 601, a base 602, a rolling ring 641, a pressing roller 642, a pressing plate 605, a peeling piece 613 and a holder 603. The structure in the sixth example is similar to that in the fourth example except that a piece of aluminum foil 611 is stuck between the base 602 and the adhesive paper sheet 601 and has a area slightly larger than that of the base 602. Thus, better air-tight effect can be achieved by way of the excellent gas barrier property of the aluminum foil layer. The holder 603 has the shape of a basket ring and is provided on the base 602. The friction plate 606 is fixed on the side of the basket ring shaped holder 603 which is towards the wall. The friction plate 606 is provided under the adhesive paper sheet 601 and is directly pressed against the surface of the wall. The friction plate 606 is also provided with a friction sheet 616 with high frictional coefficient on the surface thereof which is towards the wall. When a heavy object is placed on the holder, a torque applied on the base will be generated. The torque pulls and detaches the base from the wall while it presses the friction plate onto the wall. The sizes of the device can be so designed that the maximal static frictional force between the friction plate and the wall will be enough to bear the weight of the object and the holder within the maximal static frictional force. Thus, the friction plate bears all of the weight, while the base only bears the force perpendicular to the wall. Therefore, the adhesive sheet type holding device for mounting onto a wall according to the present invention can bear large load and can be fixed on the wall securely and durably.

## Claims

1. An adhesive sheet type holding device for mounting onto a wall comprising:
a base (502),
a holder (503) which is made in a shape of an appropriate support and attached to the base (502), and
an adhesive sheet (501) which has a good air tightness and can be tightly attached on the wall, wherein the adhesive sheet (501) is attached to the base with the surface of the adhesive sheet (501) extended outwards beyond the edge of the base (502),
**characterized in that** the device further comprises a friction plate (506) connected with the base (502) and located under the base (502) beyond the surface of the adhesive sheet (501).

2. The adhesive sheet type holding device as claimed in the claim 1, **characterized in that** an air barrier layer is provided between the adhesive sheet (501) and the base (502).

3. The adhesive sheet type holding device as claimed in the claim 2, **characterized in that** the air barrier layer is a metal membrane layer.

4. The adhesive sheet type holding device as claimed in the claim 3, **characterized in that** the metal membrane layer is an aluminum foil layer.

5. The adhesive sheet type holding device as claimed in the claim 1 or 2, **characterized in that** the adhesive sheet (501) is provided with an adhesive on a back side thereof.

6. The adhesive sheet type holding device as claimed in the claim 1 or 2, **characterized in that** the adhesive sheet (501) is provided with a fluxible solid filling substance on a back side thereof.

7. The adhesive sheet type holding device as claimed in the claim 1 or 2, **characterized in that** the adhesive sheet (501) is an electrostatic paster provided with no adhesive on a back side thereof.

8. The adhesive sheet type holding device as claimed in the claim 1 or 2, **characterized in that** a back side of the base (502) has a flat shape.

9. The adhesive sheet type holding device as claimed in the claim 1 or 2, **characterized in that** a back side of the base (402) has a shape of a protrusion projected towards the wall.

10. The adhesive sheet type holding device as claimed in the claim 1 or 2, **characterized in that** a pressing roller (442) rotatable around the base (402) is provided on a front side of the adhesive sheet (401 ), the pressing roller has a shape of a roller and is provided at an axis thereof with a shaft hole (4422) through which a shaft (406) is disposed, one end of the shaft is big enough to prevent the pressing roller from detaching from the shaft and the other end is bent into a circular ring fitted over the base.

11. The adhesive sheet type holding device as claimed in the claim 10, **characterized in that** a rolling body of the pressing roller (442) is formed into an appropriate taper, an axis of the pressing roller (442) is at an angle to a radius of the base (402).

12. The adhesive sheet type holding device as claimed in the claim 1 or 2, **characterized in that** a peeling piece (413) extending upwards is also provided on an edge of a front side of the adhesive sheet (401).

## Patentansprüche

1. Haltevorrichtung zum Kleben an einer Wand durch ein Klebpapier, mit
- einem Sockel (502),
- einem Halteelement (503), das entsprechend trägerförmig ausgebildet und an dem Sockel (502) angebracht ist; und
- einem Klebpapier (501), das gute Luftdichtheit aufweist und dicht an die Wand angeklebt werden kann, wobei das Klebpapier (501), dessen Oberfläche nach außen über den Rand des Sockels verläuft, an dem Sockel (502) angebracht ist,
**dadurch gekennzeichnet,**
**dass** die Haltevorrichtung noch eine mit dem Sockel (502) verbundene Reibplatte (506) umfasst, die unter dem Sockel (502) außerhalb der Oberfläche des Klebpapiers (501) liegt.

2. Haltevorrichtung nach Anspruch 1,
**dadurch gekennzeichnet,**
**dass** eine Luftisolationsschicht zwischen dem Klebpapier (501) und dem Sockel (502) angeordnet ist

3. Haltevorrichtung nach Anspruch 2,
**dadurch gekennzeichnet,**
**dass** die Luftisolationsschicht eine metallische Membranschicht ist

4. Haltevorrichtung nach Anspruch 3,
**dadurch gekennzeichnet,**
**dass** die metallische Membranschicht eine Aluminiumfolienschicht ist

5. Haltevorrichtung nach Anspruch 1 oder 2,
**dadurch gekennzeichnet,**
**dass** auf der Rückseite des Klebpapiers (501) Klebstoff vorgesehen ist

6. Haltevorrichtung nach Anspruch 1 oder 2,
**dadurch gekennzeichnet,**
**dass** auf der Rückseite des Klebpapiers (501) fließbarer Festfüllstoff vorgesehen ist.

7. Haltevorrichtung nach Anspruch 1 oder 2,
**dadurch gekennzeichnet,**
**dass** das Klebpapier (501) ein auf seiner Rückseite keinen Klebstoff aufweisende elektrostatische Klebpapier ist.

8. Haltevorrichtung nach Anspruch 1 oder 2,
**dadurch gekennzeichnet,**
**dass** die Rückseite des Sockels (502) plattenförmig ausgebildet ist.

9. Haltevorrichtung nach Anspruch 1 oder 2,
**dadurch gekennzeichnet,**
**dass** die Rückseite des Sockels (402) eine in Richtung der Wand hinausragende Vorsprung hat.

10. Haltevorrichtung nach Anspruch 1 oder 2,
**dadurch gekennzeichnet,**
**dass** eine um den Sockel (402) drehbare Druckrolle (442) auf der Frontseite des Klebpapiers (401) angeordnet ist, wobei die Druckrolle (442) als eine Rolle ausgebildet ist und an ihrer Achse eine Wellenbohrung (4422) angeordnet ist, durch die eine Welle (406) eingerichtet ist, wobei ein Ende der Welle so groß gewählt ist, dass das Lösen der Druckrolle aus der Welle verhindert werden kann, wobei das andere Ende der Welle kreisringförmig gebogen und an dem Sockel angepasst ist.

11. Haltevorrichtung nach Anspruch 10,
**dadurch gekennzeichnet,**
**dass** der Rollenkörper der Druckrolle (442) entsprechend kegelförmig ausgebildet ist, wobei die Achse der Druckrolle (442) mit dem Radius des Sockels (402) einen Winkel gebildet ist.

12. Haltevorrichtung nach Anspruch 1 oder 2,
**dadurch gekennzeichnet,**
**dass** auch eine nach oben erstreckte Trennscheibe (413) am Rand der Frontseite des Klebpapiers (401) angeordnet ist.

## Revendications

1. Un dispositif de support d'une feuille adhésive destinée à être montée sur un mur, comprenant :
une base (502)
un support (503) configuré de manière à avoir la forme d'un support adapté et fixé à la base (502), et
une feuille adhésive (501) ayant une bonne étanchéité à l'air et pouvant être hermétiquement montée sur le mur où la feuille adhésive (501) est fixée à la base et avec la surface de ladite feuille adhésive (501) s'étendant vers l'extérieur au-delà du bord de ladite base (502),
**caractérisé en ce que que** le dispositif comprend également une plaque de frottement (506) reliée à la base (502) et située sous cette même base (502), au-delà de la surface de la feuille adhésive (501).

2. Le dispositif de support d'une feuille adhésive, selon la revendication 1, **caractérisé en ce qu'**il présente une couche barrière d'air, entre la feuille adhésive (501) et la base (502).

3. Le dispositif de support d'une feuille adhésive, selon la revendication 2, **caractérisé en ce que** la couche imperméable est une couche membranaire métallique.

4. Le dispositif de support d'une feuille adhésive, selon la revendication 3, **caractérisé en ce que** la couche membranaire métallique est une couche en feuille d'aluminium.

5. Le dispositif de support d'une feuille adhésive, selon l'une des revendications 1 ou 2,
**caractérisé en**
**ce que** la feuille adhésive (501) est pourvue d'un adhésif en son dos.

6. Le dispositif de support d'une feuille adhésive, selon l'une des revendications 1 ou 2,
**caractérisé en**
**ce que** la feuille adhésive (501) est pourvue d'un produit de remplissage solide et fusible en son dos.

7. Le dispositif de support d'une feuille adhésive, selon l'une des revendications 1 ou 2,
**caractérisé en**
**ce que** la feuille adhésive (501) est une étiquette électrostatique dépourvue d 'adhésif en son dos.

8. Le dispositif de support d'une feuille adhésive, selon l'une des revendications 1 ou 2,
**caractérisé en**
**ce qu'**une face arrière de la base (502) a une forme plate.

9. Le dispositif de support d'une feuille adhésive, selon l'une des revendications 1 ou 2,
**caractérisé en**
**ce qu'**une face arrière de la base (402) a la forme d'une protubérance tournée vers le mur.

10. Le dispositif de support d'une feuille adhésive, selon l'une des revendications 1 ou 2,
**caractérisé en**
**ce qu'**un rouleau presseur (442) rotatif autour de la base (402) est pourvu sur une face frontale de la feuille adhésive (401), le rouleau presseur a la forme d'un rouleau et est équipé en son centre, d'un trou (4422) au travers duquel une tige (406) est disposée, une extrémité de la tige est suffisamment grosse pour empêcher le rouleau presseur de se détacher de la tige et l'autre extrémité est pliée dans un anneau circulaire monté au-dessus de la base.

11. Le dispositif de support d'une feuille adhésive, selon la revendication 10, **caractérisé en ce qu'**un corps roulant du rouleau presseur (442) forme un cône approprié, un centre du roulleau presseur (442) est à un angle du rayon de la base (402).

12. Le dispositif de support d'une feuille adhésive, selon l'une des revendications 1 ou 2,
**caractérisé en**
**ce qu'**une pièce décollable (413) s'étendant vers le haut est aussi pourvue sur un bord de la face frontale de la feuille adhésive (401).
